**Europäisches Patentamt**

**European Patent Office**

**Office européen des brevets**

(11) Veröffentlichungsnummer: **0 029 125**
**A1**

(12) ## EUROPÄISCHE PATENTANMELDUNG

(21) Anmeldenummer: **80106355.3**

(22) Anmeldetag: **18.10.80**

(51) Int. Cl.³: **B 01 D 13/04**

(30) Priorität: **15.11.79 DE 2946067**

(43) Veröffentlichungstag der Anmeldung: **27.05.81**
**Patentblatt 81/21**

(84) Benannte Vertragsstaaten: **CH DE FR GB IT LI NL**

(71) Anmelder: **Merck Patent Gesellschaft mit beschränkter Haftung, Frankfurter Strasse 250, D-6100 Darmstadt (DE)**

(72) Erfinder: **Strathmann, Heiner, Dr., Dipl.-Chem., Milanweg 15, D-7400 Tübingen (DE)**
Erfinder: **Zschocke, Peter, Dr., Dipl.-Chem., Albert-Schweitzer-Strasse 6, D-7406 Mössingen (DE)**
Erfinder: **Schmidt, Hans-Jürgen, Sterngasse 10, D-6103 Griesheim (DE)**
Erfinder: **Wolfgang, Klaus, Oberstrasse 51, D-6081 Stockstadt (DE)**

(54) Verfahren zur Umstimmung von Diffusionsmembranen, die so umgestimmten Membranen und ihre Verwendung.

(57) Diffusionsmembranen, die zur Verwendung in wässerigen Systemen geeignet sind, lassen sich zur Verwendung in organischen Lösungsmitteln umstimmen, wenn man die Membranen zunächst mit Wasser spült und dann langsam ein mit Wasser mischbares organisches Lösungsmittel in steigenden Konzentrationen zugibt, bis die Membran nur noch von diesem Lösungsmittel umspült ist und dann gegebenenfalls dieses Lösungsmittel in gleicher Weise gegen ein nicht mit Wasser mischbares Lösungsmittel austauscht.

EP 0 029 125 A1

- 3 -

0029125

Merck Patent Gesellschaft
mit beschränkter Haftung

Verfahren zur Umstimmung von Diffusionsmembranen,
die so umgestimmten Membranen und ihre Verwendung

Die Erfindung betrifft ein Verfahren zur Umstimmung von
Diffusionsmembranen, die danach zur Abtrennung organischer
Lösungsmittel verwendet werden können.

Membrantrennverfahren und dazu verwendbare Membranen
sind in großer Zahl bekannt und werden in zahlreichen
Verfahren wie z.B. Mikro- und Ultrafiltration, Umkehrosmose, Dialyse, Elektrodialyse, Gaspermeation und
Gasdiffusion verwendet. Die Trennung bzw. Anreicherung
von Stoffgemischen in Permeat und Retentat beruht auf
einer Semipermeabilität der jeweils verwendeten Membran,
die für Teile des vorgelegten Stoffgemisches durchgängig
ist, für andere Teile dagegen nicht. Man unterscheidet
dabei zumindest zwei unterschiedliche Membrantypen.
Dies sind einmal sogenannte Porenmembranen, die auf Grund
ihrer Porengröße die Permeabilität größerer Moleküle
begrenzen. Zum anderen sind dies Diffusionsmembranen,
die auch als Löslichkeitsmembranen bezeichnet werden,
bei denen die Trennschicht der Membran keine Poren aufweist, sonderen aus einer homogenen, stark gequollenen

GSPHA13 K

Gelschicht besteht. Die Permeation von Molekülen durch diese Schicht ist nicht nur von der Größe der Moleküle, sondern auch von der Aktivierungsenergie abhängig, die aus der Wechselwirkung zwischen den diffundierenden Molekülen und dem Membranmaterial resultiert. Eine zusammenfassende Darstellung der Membrantechnologie zusammen mit Hinweisen auf Originalliteratur findet sich in: Dytnerskij, Membranprozesse zur Trennung flüssiger Gemische, VEB Verlag Leipzig, 1977.

Beide Arten von Membranen werden in der Regel zur Aufarbeitung von wässerigen Lösungen eingesetzt. Wünschenswert ist jedoch ein Einsatz in allen Arten von Lösungsmitteln, auch organischen Lösungsmitteln. Bei den, z.B. zur Ultrafiltration eingesetzten, aus einem relativ starren Polymergerüst bestehenden Porenmembranen ist ein Einsatz in organischen Lösungsmitteln bekannt und ohne große Schwierigkeiten möglich.

Diffusionsmembranen, deren mechanisch nicht sehr stabile Gelschicht ständig in gequollenem Zustand gehalten werden muß, um einer Zerstörung vorzubeugen können, jedoch nicht ohne weiteres in organische Lösungsmittel eingebracht werden, da dies zur irreversiblen Schrumpfung der Gelschicht führt, wodurch die Membran unbrauchbar wird. Um auch Diffusionsmembranen problemlos in organischen Lösungsmitteln einsetzen zu können, bestand deshalb die Aufgabe, ein Verfahren zu finden, mit dem Diffusionsmembranen ohne Zerstörung der in Wasser gequollenen Gelschicht auf organische Lösungsmittel umgestimmt werden können.

Diese Aufgabe wurde durch die vorliegende Erfindung gelöst.

GSPHA13 K

0029125

Gegenstand der Erfindung ist daher ein Verfahren zur Umstimmung von Diffusionsmembranen, dadurch gekennzeichnet, daß man übliche, zur Verwendung in wässerigen Systemen geeignete Diffusionsmembranen zunächst mit Wasser spült und dann innerhalb von 2 - 8 Stunden mindestens ein wasserlösliches organisches Lösungsmittel langsam in steigenden Konzentrationen zugibt bis die Membran nur noch von diesem organischen Lösungsmittel oder Lösungsmittelgemisch umspült ist, sowie gegebenenfalls anschließend dieses mit Wasser mischbare organische Lösungsmittel unter den genannten Bedingungen gegen mindestens ein nicht mit Wasser aber mit dem ersten organischen Lösungsmittel mischbaren Lösungsmittel austauscht.

Gegenstand der Erfindung ist auch die so umgestimmte Membran.

Gegenstand der Erfindung ist weiterhin die Verwendung der so umgestimmten Membran in Membrantrennverfahren.

Die mit der vorliegenden Erfindung erzielten Vorteile liegen darin, daß nunmehr auch Diffusionsmembranen zur problemlosen Abtrennung von organischen Lösungsmitteln verwendet werden können. Dies ist insbesondere deshalb von Bedeutung, da die schon früher in organischen Lösungsmitteln eingesetzten Porenmembranen ein Rückhaltevermögen nur für Moleküle von einem Molekulargewicht von mindestens 500 zeigen, während Diffusionsmembranen mit Ausschlußgrenzen bis hinunter zu etwa 50 Molekulargewichtseinheiten arbeiten.

0029125

In das erfindungsgemäße Verfahren können alle üblichen, in organischen Lösungsmitteln beständige Diffusionsmembranen eingesetzt werden. Dies sind in der Regel asymmetrisch aufgebaute Polymerfilme, die auf einer relativ starren porösen Polymerschicht von etwa 0,1 bis 1 mm Dicke die nur etwa 0,1 bis 1 um dicke unporöse Gelschicht tragen. Dabei ist allein diese dünne Gelschicht für die Trennung wirksam, während die poröse Trägerschicht lediglich zur Stabilisierung und zur Drainage benötigt wird.

Diese Membranen sind aus lyophilen Polymeren aufgebaut. Besonders bevorzugt werden Membranen auf der Basis Polyamid, Polyamidhydrazid und Celluloseacetat. Die Herstellung dieser Membranen erfolgt nach bekannten Methoden und ist z.B. in der US-PS 3,133,132, der US-PS 3,133,137, der DE-PS 22 51 348, dem Journal of Applied Polymer Science 15, 811 (1971) und in Die Angewandte Macromolekulare Chemie 73, 1 (1978) beschrieben. Solche Membranen werden auch von einer Reihe von Herstellern zum Kauf angeboten. Wie bereits erwähnt, muß die Gelschicht der Membran ständig in gequollenem Zustand gehalten werden. Dazu ist die in Wasser gequollene Schicht gegebenenfalls mit Glyzerin versetzt, das durch seine Hygroskopizität ein Austrocknen verhindert. Eine solche Membran kann ohne weitere Vorbehandlung in Wasser oder eine wässerige Lösung eingebracht werden. Beim Einbringen in ein organisches Lösungsmittel wird jedoch die empfindliche Gelstruktur zerstört. Erfindungsgemäß geht man daher so vor, daß man die Membran in Wasser bringt und zunächst mit voll entsalztem Wasser spült, um die gegebenenfalls gegen Austrocknen und zur Konservierung zugesetzten Additive, wie z. B. Glyzerin und Formalin, zu entfernen.

GSPHA13 K

0029125

Nach diesem Spülen mit Wasser wird nun sehr langsam dem Wasser ein mit Wasser mischbares organisches Lösungsmittel zugemischt. Wesentlich dabei ist, daß die Konzentration des organischen Lösungsmittels im Wasser nur sehr langsam zunimmt. Die Zeit, in der die Konzentration des organischen Lösungsmittels bis auf 100 % gesteigert wird sollte etwa zwischen 2 und 8 Stunden liegen. Ein längerer Zeitraum wirkt sich nicht negativ auf die Qualität der Membran aus, ist jedoch andererseits nicht notwendig und sollte deshalb aus ökonomischen Gründen vermieden werden. Die Mindestzeit von etwa 2 Stunden sollte jedoch nicht wesentlich unterschritten werden, da sonst die empfindliche Membran zerstört oder zumindest in ihrer Leistung gemindert werden kann. Bevorzugt werden Austauschzeiten von etwa 3 - 4 Stunden.

Der Austausch kann so erfolgen, daß die Membran in einem bestimmten Volumen Wasser vorgelegt wird und von diesem umspült wird und daß dazu dann portionsweise oder kontinuierlich das mit Wasser mischbare organische Lösungsmittel zugegeben wird, bis eine Konzentration von etwa 80 %, vorzugsweise 90 %, organisches Lösungsmittel erreicht ist. Das Gesamtvolumen der Spülflüssigkeit steigt dabei auf das 5 - 10fache an. Die Membran kann dann schnell in ein Gefäß mit dem reinen organischen Lösungsmittel gebracht werden. Der Austausch kann jedoch auch bei konstantem Volumen der Spülflüssigkeit so erfolgen, daß das Wasser bzw. die Mischung Wasser/organisches Lösungsmittel durch das reine organische Lösungsmittel sukzessive verdrängt wird. In jedem Fall ist es wichtig, daß die Spülflüssigkeit sehr gut durchmischt wird, so daß bei Zugabe des organischen Lösungsmittels keine oder jedenfalls nur geringe Konzentrationsgradienten innerhalb der Spülflüssigkeit entstehen.

0029125

Zur Umstimmung auf das organische Lösungsmittel kann die Membran, die meist in Form einer runden Scheibe geliefert wird, lose in einem Behälter vorgelegt werden. Vorzugsweise wird die Membran jedoch in einen Membranträger so eingespannt, daß beim Umstimmen keine Verformung eintreten kann. Bevorzugt wird dazu eine übliche Trennzelle verwendet, so daß kein Umbau der Membran für den sich an die Umstimmung anschließenden Trennprozeß erfolgen muß.

Falls das sich anschließende Membrantrennverfahren in einem mit Wasser mischbaren organischen Lösungsmittel durchgeführt werden soll, kann zur Umstimmung der Membran direkt dieses Lösungsmittel verwendet werden. Soll jedoch die Abtrennung eines mit Wasser nicht mischbaren Lösungsmittels durchgeführt werden, ist es notwendig, zunächst die Umstimmung auf ein mit Wasser mischbares Lösungsmittel durchzuführen und danach unter Beachtung der gleichen Verfahrensmaßnahmen die Umstimmung auf das mit Wasser nicht mischbare Lösungsmittel vorzunehmen.

Als organische Lösungsmittel zur Umstimmung und zur Durchführung der Membrantrennverfahren kommen an sich alle Lösungsmittel in Frage, die das Polymermaterial der Membran nicht angreifen. Beispielhaft sind zu nennen: aromatische und aliphatische, gegebenenfalls verzweigte und gegebenenfalls substituierte, insbesondere halogenierte Kohlenwasserstoffe, Ketone, Alkohole, Äther und Ester.

Bei der Umstimmung auf mit Wasser nicht mischbare organische Lösungsmittel kann in erster Stufe an sich jedes mit Wasser mischbare organische Lösungsmittel verwendet werden. Bevorzugt wird man jedoch eines verwenden, das sowohl preiswert ist, als auch problemlos wieder aufbereitet oder beseitigt werden kann. Insbesondere haben sich dabei Methanol und Aceton bewährt, wobei vorzugsweise Methanol als Übergangsmittel für das Umstimmen auf Ester und halogenierte Kohlenwasserstoffe verwendet wird, während Aceton vorteilhaft bei der Umstimmung auf Äther und aliphatische und aromatische Kohlenwasserstoffe eingesetzt werden kann. Dies ist jedoch keineswegs zwingend, sondern es kann aufgrund der hier angeführten Überlegungen ohne weiteres für das jeweilige wasserunlösliche Lösungsmittel ein optimales Übergangslösungsmittel gefunden werden.

Nach Beendigung des ein- oder mehrstufigen Umstimmungsverfahrens von Wasser auf ein organisches Lösungsmittel ist in verstärktem Maße darauf zu achten, daß die Membran ständig lösungsmittelfeucht gehalten wird, da eine in organischen Lösungsmitteln gequollene Membran aufgrund der in der Regel leichten Flüchtigkeit dieser Lösungsmittel leichter zum Austrocknen neigt und damit unbrauchbar wird.

Eine nach dem erfindungsgemäßen Verfahren auf ein bestimmtes organisches Lösungsmittel umgestimmte Membran kann nach dem gleichen Verfahren auf ein anderes Lösungsmittel oder Lösungsmittelgemisch, auch wieder auf Wasser, umgestimmt werden, wobei gegebenenfalls auch hier die Umstimmung in mehreren Stufen durchgeführt werden muß. Die Membran kann auf diese Weise jedem anfallenden Trennproblem angepaßt werden.

GSPHA13 K

0029125

Vorzugsweise werden die erfindungsgemäß umgestimmten Membranen zum Aufkonzentrieren von verdünnten Lösungen eingesetzt, die bei verschiedenen Produktionsprozessen, wie z. B. bei Extraktionen oder als Eluat bei chromatographischen Trennungen, anfallen können. Durch die vorliegende Erfindung wird ermöglicht, die an sich bekannten Membrantrennverfahren mit Diffusionsmembranen problemlos auch bei organischen Lösungsmitteln anwenden zu können.

Beispiel 1:

Eine Diffusionsmembran auf Basis Polyamidhydrazid (Membran BM-1 der Forschungsinstitut Berghof GmbH) wird zweimal mit je 100 ml voll entsalztem Wasser gespült und danach in 100 ml frisches, voll entsalztes Wasser gelegt. Unter Rühren werden innerhalb von zwei Stunden kontinuierlich insgesamt 500 ml Methanol zugetropft. Danach wird die Membran schnell in 100 ml reines Methanol überführt. Innerhalb von zwei Stunden werden dazu 500 ml Dichlormethan zugetropft. Nach Einbau in eine Trennzelle wird die Membran durch Umpumpen von reinem Dichlormethan bei einem Druck von 50 bar eine Stunde konditioniert. Danach beträgt die Permeatleistung für reines Dichlormethan bei 50 bar Druck und 303 $^\circ$K 20 Liter pro $m^2$ pro Stunde. Beim Einsatz der Membran zur Abtrennung von Dichlormethan aus einer 2 %igen Coffeinlösung in Dichlormethan wird bei 50 bar Druck und 303 $^\circ$K eine Permeatleistung von 9,1 Liter pro $m^2$ pro Stunde und ein Rückhaltevermögen für Coffein von 93,6 % festgestellt. Während einer Beobachtungsdauer von über 80 Stunden behält die Membran ihre Trennleistung bei.

GSPHA13 K

Beispiel 2:

10 Diffusionsmembranen auf Basis Polyamidhydrazid, das auf ein mit Polyäthylen beschichtetes Filterpapier aufgefällt ist (Membran BM-1T der Forschungsinstitut Berghof GmbH), mit insgesamt 0,18 $m^2$ Fläche werden in wasserfeuchtem Zustand in einen Membranträger eingebaut und eine Stunde bei einem Druck von 50 bar mit 10 Liter Wasser gespült. Nach Austauschen des Spülwassers durch 4 Liter frisches, voll entsalztes Wasser werden innerhalb einer Stunde 4 Liter Methanol in kleinen Chargen zugegeben. Von den so erhaltenen 8 Liter Lösung werden 4 Liter entnommen und zu den verbleibenden 4 Liter 50 %iger Lösung 4 Liter Methanol in kleinen Chargen innerhalb von 30 Minuten zugegeben. Die so erhaltene 75 %ige Lösung wird wieder halbiert und innerhalb von 15 Minuten mit weiteren 4 Liter Methanol versetzt. Danach werden die 8 Liter Lösung gegen 4 Liter reines Methanol ausgetauscht und danach auf die gleiche Weise mit insgesamt 4 x 4 Liter Dichlormethan auf reines Dichlormethan umgestimmt. Während des gesamten Umstimmungsvorganges wird das jeweilige Lösungsmittel bzw. Lösungsmittelgemisch mit ca. 20 bar über die Membranen gepumpt. Beim Einsatz dieser Membranen zur Abtrennung von Dichlormethan aus einer etwa 0,4 %igen Theobromin-Lösung bei einem Druck von 35 bar und 303 $^{\circ}$K wird für die Ausgangslösung eine Permeatleistung von 10 Liter pro $m^2$ pro Stunde gemessen, während das Rückhaltevermögen der Membranen für Theobromin 90,0 % beträgt. Im Laufe des Trennverfahrens steigt die Theobrominkonzentration der Ausgangslösung bis auf etwa 5 %, gleichzeitig sinkt die Permeatleistung auf ca. 6,3 Liter pro $m^2$ pro Stunde und das Rückhaltevermögen erreicht einen Wert von 95 %.

GSPHA13 K

Beispiel 3:

Eine Diffusionsmembran auf Basis aromatisches Polyamid (Membran BM 05 der Forschungsinstitut Berghof GmbH) mit 36 cm$^2$ aktiver Fläche wird in wasserfeuchtem Zustand in einen Membranträger eingespannt und zweimal mit Wasser gut gespült. Danach werden 150 ml Wasser vorgelegt und unter ständigem Umpumpen innerhalb von 3 Stunden mit 200 ml Aceton versetzt. In den folgenden 3 Stunden werden weitere 600 ml Aceton kontinuierlich zugegeben. Die so erhaltene 84 %ige Acetonlösung wird durch reines Aceton ersetzt und anschließend auf gleiche Weise wie im ersten Schritt durch Dichlormethan ersetzt. Beim Einsatz zur Abtrennung von Dichlormethan aus einer 2 %igen Coffeinlösung in Dichlormethan beträgt bei einem Druck von 50 bar und einer Temperatur von 303 $^o$K die Permeatleistung 8,4 Liter pro m$^2$ pro Stunde und das Rückhaltevermögen 95,6 %.

Beispiel 4:

Eine mit Wasser gespülte und in eine Laborzelle eingespannte Membran analog Beispiel 1 wird innerhalb von 3,5 Stunden kontinuierlich auf 88 % Aceton umgestimmt. Nach Austausch dieser Lösung gegen reines Aceton beträgt die Permeatleistung bei einer Temperatur von 303 $^o$K und einem Druck von 50 bar 4,4 Liter pro m$^2$ pro Stunde. Durch vierstündiges Umpumpen von reinem Aceton läßt sich die Permeatleistung auf 6,0 Liter pro m$^2$ pro Stunde steigern.

Beispiel 5:

Eine Diffusionsmembran analog Beispiel 1 wird in eine Laborzelle eingebaut und nach dem Spülen mit reinem Wasser innerhalb von 3 Stunden kontinuierlich auf reines Methanol

GSPHA13 K

umgestimmt. Unmittelbar nach der Umstimmung beträgt die Permeatleistung für reines Lösungsmittel 11,1 Liter pro $m^2$ pro Stunde. Durch Umpumpen von reinem Lösungsmittel bei 50 bar über die Membran kann eine Durchsatzerhöhung auf über 14 Liter pro $m^2$ pro Stunde erreicht werden. Beim Einsatz der Membran zur Abtrennung von Methanol aus einer methanolischen Extraktionslösung mit 0,01 % Nitroechtblau 2B liegt das Rückhaltevermögen für Nitroechtblau 2B bei über 98 %.

Beispiel 6:

Eine in einen Membranträger eingespannte Membran analog Beispiel 1 wird nach Spülen mit Wasser innerhalb von 2 Stunden kontinuierlich auf Aceton und anschließend innerhalb von 4 Stunden kontinuierlich auf Xylol umgestimmt. Die Permeatleistung für reines Xylol beträgt bei 50 bar und 300 $^{o}K$ 0,8 Liter pro $m^2$ pro Stunde. Beim Einsatz der Membran zur Abtrennung von Xylol aus einer Reinigungslösung, die 1 % eines Kugellagerfettes enthält, kann kein Fett im Permeat nachgewiesen werden.

Beispiel 7:

Eine Diffusionsmembran analog Beispiel 1 wird in einen Membranträger eingespannt, mit Wasser gespült und innerhalb von 2 Stunden kontinuierlich auf reines Aceton und anschließend innerhalb von 4 Stunden kontinuierlich auf Heptan umgestimmt. Die Permeatleistung dieser Membran beträgt bei 50 bar und 300 $^{o}K$ 1,2 Liter pro $m^2$ pro Stunde.

GSPHA13 K

Beispiel 8:

Die nach Beispiel 2 auf Dichlormethan umgestimmte
Diffusionsmembran wird zur Abtrennung eines Prostaglandins
aus dem Eluat einer Chromatographiesäule eingesetzt. Das
Eluat setzt sich aus 93,5 Volumenprozent Dichlormethan,
3,6 Volumenprozent Methanol und 2,9 Volumenprozent
Essigsäure zusammen, worin 0,2 % eines Prostaglandins gelöst sind. Beim Aufkonzentrieren zeigt sich,
daß die Permeatzusammensetzung sich nicht wesentlich
ändert, das Permeat jedoch frei von Prostaglandin ist,
so daß das Permeat wieder für die Chromatographie als
Elutionsmittel eingesetzt werden kann.

GSPHA13 K

0029125

Merck Patent Gesellschaft
mit beschränkter Haftung


Patentansprüche


1.  Verfahren zur Umstimmung von Diffusionsmembranen,
    dadurch gekennzeichnet, daß man übliche, zur Verwendung in wässerigen Systemen geeignete Diffusionsmembranen zunächst mit Wasser spült und dann innerhalb von 2 - 8 Stunden mindestens ein wasserlösliches
    organisches Lösungsmittel langsam in steigenden
    Konzentrationen zugibt, bis die Membran nur noch
    von diesem organischen Lösungsmittel oder Lösungsmittelgemisch umspült ist, sowie gegebenenfalls
    anschließend dieses mit Wasser mischbare organische
    Lösungsmittel unter den genannten Bedingungen gegen
    mindestens ein nicht mit Wasser, aber mit dem ersten
    organischen Lösungsmittel mischbaren Lösungsmittel
    austauscht.


2.  Verfahren nach Anspruch 1, dadurch gekennzeichnet,
    daß die Membran während des Umstimmvorgangs in
    einen Membranträger eingespannt ist.

GSPHA13 K

0029125

3. Verfahren nach den Ansprüchen 1 oder 2, dadurch gekennzeichnet, daß jeweils nur ein einzelnes organisches Lösungsmittel verwendet wird.

4. Diffusionsmembran, ein- oder mehrstufig umgestimmt nach den Verfahren der Ansprüche 1, 2 oder 3.

5. Verwendung der Diffusionsmembran nach Anspruch 4 in Membrantrennverfahren.

6. Verwendung der Diffusionsmembran nach Anspruch 4 zur Abtrennung organischer Lösungsmittel oder Lösungsmittelgemische.

7. Verwendung der Diffusionsmembran nach Anspruch 4 zur Abtrennung des Lösungsmittels oder Lösungsmittelgemisches, das als letztes während des Umstimmungsverfahrens benutzt worden ist.

GSPHA13 K

Europäisches Patentamt

**EUROPÄISCHER RECHERCHENBERICHT**

0029125
Nummer der Anmeldung

EP 80 10 6355.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 4 120 098 (E.I. DU PONT DE NEMOURS)  * Ansprüche 1, 4 bis 6 * | 1,3-5 |
|  | US - A - 4 080 743 (E.I. DU PONT DE NEMOURS)  * Anspruch 1 * | 1,3-5 |
|  | US - A - 4 080 744 (E.I. DU PONT DE NEMOURS)  * Ansprüche 1, 2, 5 * | 1,3-5 |
| A | DE - A1 - 2 621 519 (SARTORIUS-MEMBRAN-FILTER)  * vollständiges Dokument * |  |

**KLASSIFIKATION DER ANMELDUNG (Int. Cl.³)**

B 01 D 13/04

**RECHERCHIERTE SACHGEBIETE (Int. Cl.³)**

B 01 D 13/00
B 01 D 13/04
B 01 D 53/22
C 08 J 5/18

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 10-02-1981 | KÜHN |

EPA form 1503.1  06.78